# EUROPÄISCHE PATENTSCHRIFT

(11) **EP 2 071 955 B1**
(45) Veröffentlichungstag und Bekanntmachung des Hinweises auf die Patenterteilung: **09.01.2013**
(21) Anmeldenummer: 08019560.5
(22) Anmeldetag: 08.11.2008
(51) Int. Cl.: A21C 5/02, A21C 7/00

(54) **Teigbearbeitungsanlage**
Dough processing plant
Installation de traitement de pâte

(30) Priorität: 22.12.2007 DE 102007062386
(43) Veröffentlichungstag der Anmeldung: 24.06.2009
(73) Patentinhaber: Werner & Pfleiderer Lebensmitteltechnik GmbH, 91550 Dinkelsbühl (DE)
(72) Erfinder: Meier, Alexander, 91602 Dürrwangen (DE); Habermann, Christian, 91596 Burk (DE)
(74) Vertreter: Hofmann, Matthias

(56) Entgegenhaltungen:
- DE-A1- 2 338 830
- DE-A1- 10 249 496
- GB-A- 908 168

## Beschreibung

Die Erfindung betrifft eine Teigbearbeitungsanlage nach dem Oberbegriff des Anspruchs 1.

Eine derartige Teigbearbeitungsanlage ist bekannt aus der DE 102 49 496 A1. Hinsichtlich der Übergabesicherheit von einer Portionierkammer der Teig-Portioniervorrichtung hin zu einer Wirkkammer der Teig-Wirkvorrichtung beim Betrieb der Teigbearbeitungsanlage hat diese bekannte Teigbearbeitungsanlage, insbesondere dann, wenn ein hoher Durchsatz der Teigbearbeitungsanlage gefordert ist, noch Verbesserungspotential.

Aus der WO 03/022057 A2 ist eine Teigbearbeitungsanlage mit einem Verstellzylinder offenbart, mit dem durch eine vertikale Verlagerung zwischen einem größeren und einem kleineren Messkolben einer Portioniervorrichtung der Teigbearbeitungsanlage gewechselt werden kann.

Es ist eine Aufgabe der vorliegenden Erfindung, eine Teigbearbeitungsanlage der eingangs genannten Art derart weiterzubilden, dass auch bei hohem Durchsatz eine sichere Übergabe von Teigportionen von der mindestens einen Portionierkammer hin zur mindestens einen Wirkkammer gegeben ist.

Diese Aufgabe ist erfindungsgemäß gelöst durch eine Teigbearbeitungsanlage mit den im Anspruch 1 angegebenen Merkmalen.

Erfindungsgemäß wurde erkannt, dass eine Abstands-Verstelleinrichtung zur Möglichkeit führt, einen Übergabeweg von der mindestens einen Portionierkammer hin zur mindestens einen Wirkkammer an Betriebsbedingungen der Teigbearbeitungsanlage, insbesondere an die Teigart, die Teigmenge oder die Teigdichte, so anzupassen, dass je nach den vorliegenden Betriebsbedingungen eine optimale Teigportionsübergabe gewährleistet ist. Durch die Anpassung des vertikalen Abstands kann ein zielgenauer Fallweg der Teigportion vom Ausstoßkolben in die zugeordnete Wirkkammer gewährleistet werden. Dies ermöglicht eine schnelle und gleichzeitig sichere Übergabe und damit einen hohen Durchsatz der Teigbearbeitungsanlage. Zur Vorgabe des vertikalen Abstandes reicht eine Verstellung zwischen der Übergabeeinrichtung und der Wirkkammer mit einer vertikalen Richtungskomponente aus. Diese Verstellung muss nicht in exakt vertikaler Richtung erfolgen. Die Verstellungbewegung der Verstelleinrichtung zur Vorgabe des vertikalen Abstandes kann insbesondere auch in diagonaler Richtung oder längs eines parabolischen Weges geführt sein. Hierdurch kann eine Anpassung der Position der Wirkkammer relativ zur Übergabeeinrichtung längs eines Fallweges der Teigportion gewährleistet werden.

Eine Verstelleinrichtung nach Anspruch 2 verbessert die auf die jeweiligen Betriebsbedingungen abgestimmte Relativpositionierung der mindestens einen Portionierkammer zur mindestens einen Wirkkammer nochmals. Sich horizontal bzw. lateral auswirkende Impulse, die auf die zu übergebende Teigportion wirken, können bei der Vorgabe des horizontalen bzw. lateralen Abstandes durch die Verstelleinrichtung mitberücksichtigt werden.

Je nach den konstruktiven Gegebenheiten der Teigbearbeitungsanlage ist eine Verlagerung der Teig-Wirkvorrichtung nach Anspruch 3 oder eine Verlagerung der Teig-Portioniervorrichtung nach Anspruch 4 die konstruktiv vorteilhaftere Variante. Natürlich ist auch möglich, sowohl die Teig-Wirkvorrichtung als auch die Teig-Portioniervorrichtung erfindungsgemäß verstellbar auszuführen. Der Verlagerungsantrieb kann manuell oder motorisch erfolgen.

Bei einer Verstelleinrichtung nach Anspruch 5 ist es möglich, den Abstand zwischen der mindestens einen Portionierkammer und der mindestens einen Wirkkammer abhängig von den Betriebsdaten der Teigbearbeitungsanlage, insbesondere abhängig von einer Portionsmenge oder einer Teigart, automatisch gesteuert vorzugeben.

Eine Signalverbindung nach Anspruch 6 ermöglicht eine gesteuerte Übernahme von Teigportionen von der Portionierkammer in die Wirkkammer mit Hilfe einer synchronisierten Relativbewegung der Portioniervorrichtung mit der die Teigportionen von der Portioniervorrichtung übernehmenden Wirkvorrichtung. Dies kann die Übergabesicherheit nochmals verbessern.

Ein Spindelhubgetriebe nach Anspruch 7 führt zu einer positionsgenauen Verstellung durch die Verstelleinrichtung. Das Spindelhubgetriebe kann insbesondere als selbsthemmendes Spindelhubgetriebe ausgeführt sein. Alternativ oder zusätzlich ist auch eine Verriegelung der jeweiligen Verstellposition der Teig-Portioniervorrichtung und/oder der Teig-Wirkvorrichtung möglich. Auf diese Weise werden entsprechende Halterungen der Verstelleinrichtung gegen schädliche Wirkungen von Vibrationen der Teig-Portioniervorrichtung und/oder der Teig-Wirkvorrichtung geschützt.

Eine Führungseinrichtung nach Anspruch 8 ermöglicht eine positionsgenaue Verstellung durch die Verstelleinrichtung.

Eine Wirktrommel nach Anspruch 9 erlaubt insbesondere das gleichzeitige Wirken einer Mehrzeit von Teigportionen. Die Wirktrommel kann gestaltet sein wie in der DE 102 49 496 A1 oder in der DE 103 06 438 A1 beschrieben.

Ein Aufbau der Führungseinrichtung nach Anspruch 10 ist insbesondere bei einer schweren Wirktrommel betriebssicher.

Dies gilt insbesondere bei einer Führungseinrichtung nach Anspruch 11.

Eine Ausgestaltung nach Anspruch 12 reduziert die Gewichtsbelastung, insbesondere von Führungselementen der Verstelleinrichtung. Die mit unter schwere Antriebskomponente, die ortsfest bleibt, muss nicht mitverlagert werden.

Eine Bandlängen-Ausgleichseinrichtung nach Anspruch 13 ermöglicht eine Wirktrommel-Verstellung mit gleichzeitig konstanter Spannung des Wirkbandes. Die Bandlängen-Ausgleichseinrichtung kann über eine Federvorspannung oder auch über einen pneumatischen Antrieb erfolgen.

Ein Ausführungsbeispiel der Erfindung wird nachfolgend anhand der Zeichnung näher erläutert. In dieser zeigen:
- Fig. 1: schematisch eine innere Details zeigende Seitenansicht einer Teigbearbeitungsanlage;
- Fig. 2: im Ausschnitt Komponenten einer Hub-Verstelleinrichtung einer Wirkvorrichtung der Teigbearbeitungsanlage nach Fig. 1;
- Fig. 3: verglichen mit Fig. 1 stärker im Detail eine perspektivische Darstellung eines Ausschnitts der Teigbearbeitungsanlage aus einer im Vergleich zur Fig. 2 ähnlichen Blickrichtung;
- Fig. 4: in einer Explosionsdarstellung Details einer Linear-Führungseinrichtung der Hub-Verstelleinrichtung der Teigbearbeitungsanlage;
- Fig. 5: in einer Explosionsdarstellung Details der Hub-Verstelleinrichtung im Bereich der einen internen Wirkvorrichtungsantrieb zugeordneten Komponenten der Linear-Führungseinrichtung;
- Fig. 6: Baugruppen der Teig-Wirkvorrichtung zusammen mit der Hub-Verstelleinrichtung und der Linear-Führungseinrichtung in einer perspektivischen Darstellung; und
- Fig. 7: schematisch und vergrößert ein abgabeseitiges Ende eines Ausstoßkolbens zusammen mit einer Teigportion bei der Übergabe von dieser in eine Wirkzelle der Teig-Wirkvorrichtung.

Eine Teigbearbeitungsanlage 1 dient zum Portionieren und zum Wirken von Teig, z. B. bei der Brötchenherstellung. Teig 2 ist in einen Zuführtrichter 3 eingefüllt. Der Zuführtrichter 3 wird wie die anderen Komponenten der Teigbearbeitungsanlage 1 von einem Tragrahmen 4 getragen, der unterteilt ist in ein Antriebsgestell 5 und einen Gestellaufbau 6. Das Antriebsgestell 5 ist über Rollen 7 fahrbar.

Eine bodenseitige Ausgangsöffnung des Zuführtrichters 3 steht mit einem Förderraum in Verbindung, in dem ein Förderkolben 8 im Wesentlichen horizontal läuft. Der Förderkolben 8 und der Zuführtrichter 3 sind Teil einer Teig-Zuführeinrichtung der Teigbearbeitungsanlage 1. Eine Förderbewegung des Förderkolbens 5 wird durch einen Kurbeltrieb 9 angetrieben, der mechanisch so ausgeführt sein kann, wie dies z. B. in der EP 0 494 367 A1 beschrieben ist, und daher nicht im Einzelnen erläutert wird. Der Kurbeltrieb 9 wird über einen Hydraulikzylinder 10 angetrieben.

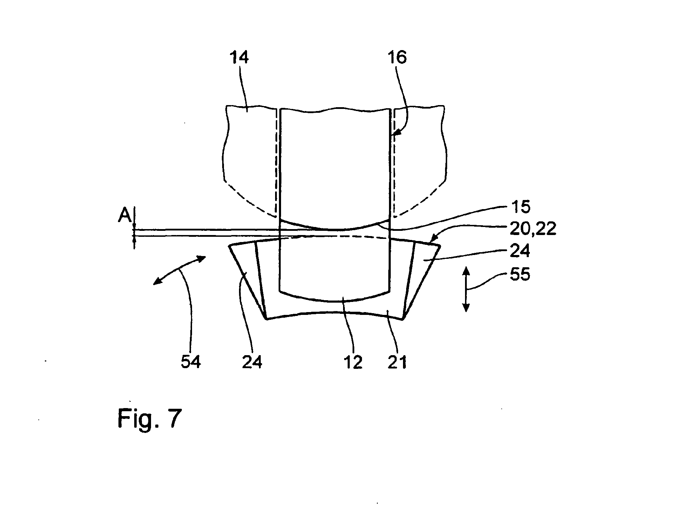

Ein stirnseitiger Boden 11 des Förderkolbens 8 stellt eine Begrenzungswand eines Weitergaberaums für einen portionierten Teigling 12 dar. Teil des Weitergaberaums ist eine Portionierkammer 13, die zu drei Seiten hin begrenzt ist durch zwei Flügel eines Drehschiebers 14 sowie durch eine Ausstoßwand 15 (vgl. Fig. 7) eines Ausstoßkolbens 16. Der Drehschieber 14 zusammen mit dem Ausstoßkolben 16 ist Teil einer Teig-Portioniervorrichtung der Teigbearbeitungsanlage 1. Der Drehschieber 14 stellt zusammen mit dem Ausstoßkolben 16 zudem eine Übergabeeinrichtung der Teigbearbeitungsanlage 1 dar, die während Übergabezeiträumen eine Teigportion, also den portionierten Teigling 12, von der Portionierkammer 13 an die Wirkkammer 21 übergibt. Über einen bekannten und daher nicht näher erläuterten Kurbeltrieb können der Drehschieber 14 und der Ausstoßkolben 16 synchronisiert zur Förderbewegung des Förderkolbens 8 angetrieben werden. Eine äußere Umfangswand des Drehschiebers 14 gleitet hierbei auf einer Führungswand 17, die in einem bodenseitigen Trägerkörper 18 des Förderkolbens 8 ausgeführt ist.

Unterhalb des Trägerkörpers 18 ist der Führungswand 17 benachbart eine Abwurfwalze 19 angeordnet.

Der Kurbeltrieb für den Drehschieber 14 ist Teil einer Übergabeeinrichtung zur Übergabe der portionierten Teiglinge 12 vom Förderraum am bodenseitigen Ende des Zuführtrichters 3 hin zu einer Wirktrommel 20, die eine Teig-Wirkvorrichtung der Teigbearbeitungsanlage 1 darstellt. Dabei findet eine Übergabe von der Portionierkammer 13 der Teig-Portioniervorrichtung hin zu einer in einer Übergabeposition vorliegenden Wirkkammer bzw. Wirkzelle 21 der Wirktrommel 20 statt.

Die Wirktrommel 20 liegt unterhalb des Drehschiebers 14 und hat eine hohlzylindrische, in bekannter Weise Durchbrechungen aufweisende Kammertrommel 22 sowie eine hierzu koaxial angeordnete innere Wirkwand 23. In Umfangsrichtung der Kammertrommel 22 sind parallel zur Längsachse der Kammertrommel 22 Wirkzellen-Begrenzungsstege 24 gleichverteilt angeordnet, die einen sich von der inneren Wirkwand 23 zur äußeren Mantelfläche der Kammertrommel 22 verbreiternden dreieckigen Querschnitt aufweisen.

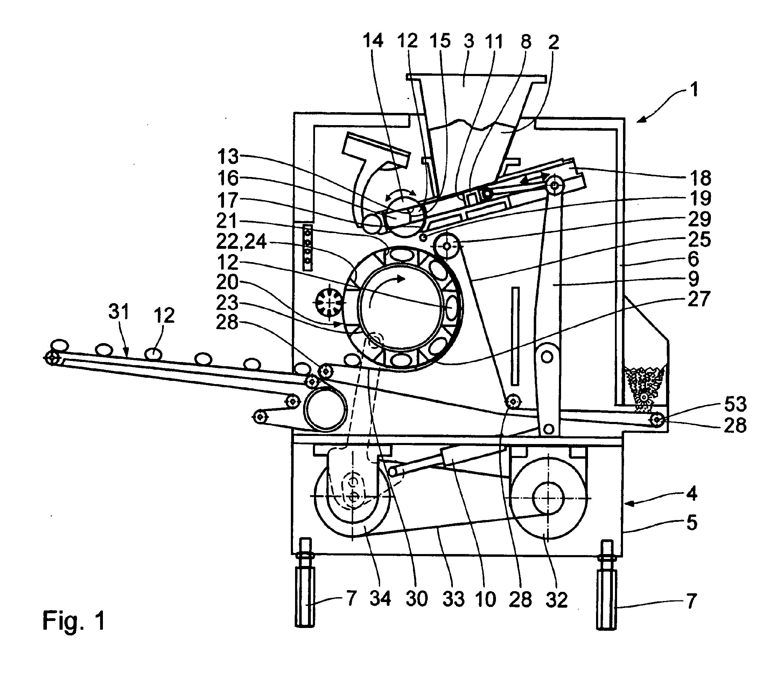

Jeweils zwei benachbarte Wirkzellen-Begrenzungsstege 24 begrenzen mit den zwischenliegenden Abschnitten der inneren Wirkwand 21 sowie einem über einen Umfangsabschnitt an der Kammertrommel 22 außen anliegenden Wirkband 25 die Wirkzellen 21, die jeweils zur Aufnahme eines Teiglings 12 dienen. Insgesamt hat die Wirktrommel 20 mehrere zehn derartiger Wirkkammern 21. Bei der Ausführung nach Fig. 1 liegen in Umfangsrichtung acht Wirkkammern 21 vor. Senkrecht zur Zeichenebene der Fig. 1 liegen nochmals etwa acht derartige Wirkkammern 21 hintereinander, so dass beispielsweise 64 Wirkkammern 21 bei der Wirktrommel 20 vorhanden sein können.

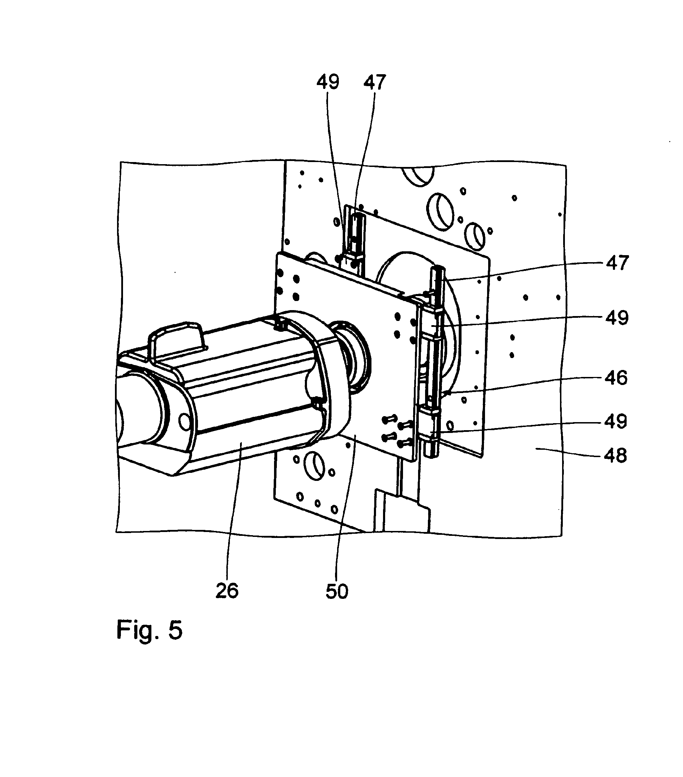

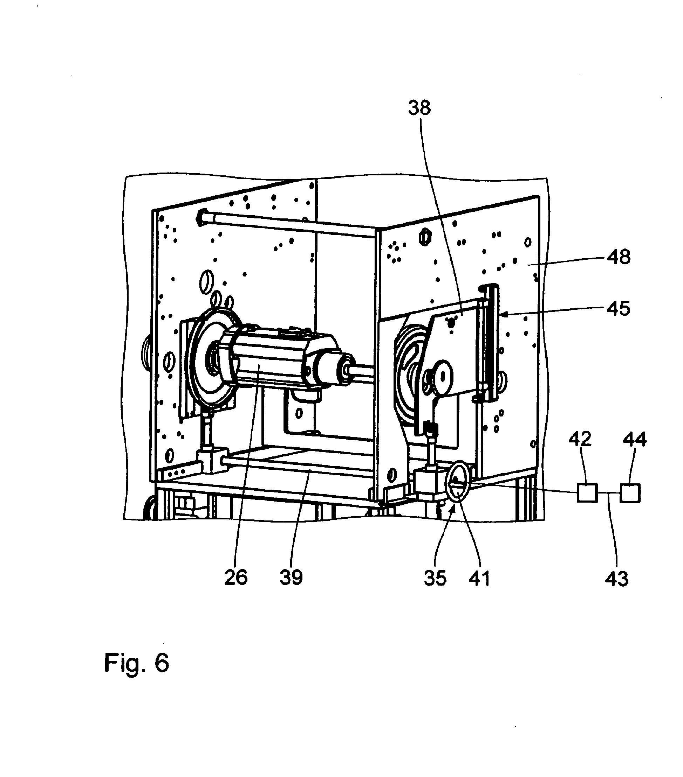

Ein Antrieb der Wirktrommel 20 kann beispielsweise wie in der DE 103 06 438 A1 beschrieben ausgeführt sein. Ein Antriebsmotor 26 ist benachbart zu einem der beiden Achsstummel einer längs der Wirktrommel-Längsachse verlaufenden Wirktrommelachse angeordnet (vgl. Fig. 5 und 6).

Die Kammertrommel 22 steht mit einem Wirk-Fördertrum 27 des Wirkbandes 25 in Kontakt. Das Wirkband 25 ist ein Endlosband, das über drei Umlenkrollen 28, die Kammertrommel 22 sowie über eine Bandantriebswalze 29 zum Wirkbandantrieb geführt ist. In Umlaufrichtung des Wirkbandes 25 geht das Wirk-Fördertrum 27 in ein Abführ-Fördertrum 30 zum Abführen der gewirkten Teiglinge 12 aus den Wirkkammern 21 über. Einem in Förderrichtung liegenden Endabschnitt des Abführ-Fördertrums 30 benachbart ist eine Teig-Abführeinrichtung 31 nachgeordnet, die ein endlos umlaufendes Förderband zum Abführen der gewirkten Teiglinge 12 hat. Der Antrieb für den Drehschieber 14, für die Abwurfwalze 19, für die Bandantriebswalze 29 sowie für die Teig-Abführeinrichtung 31 kann abgeleitet sein von einem Hauptantrieb 32 der Teigbearbeitungsanlage, der über einen Zahnriemen 33 ein Exzenterrad 34 antreibt.

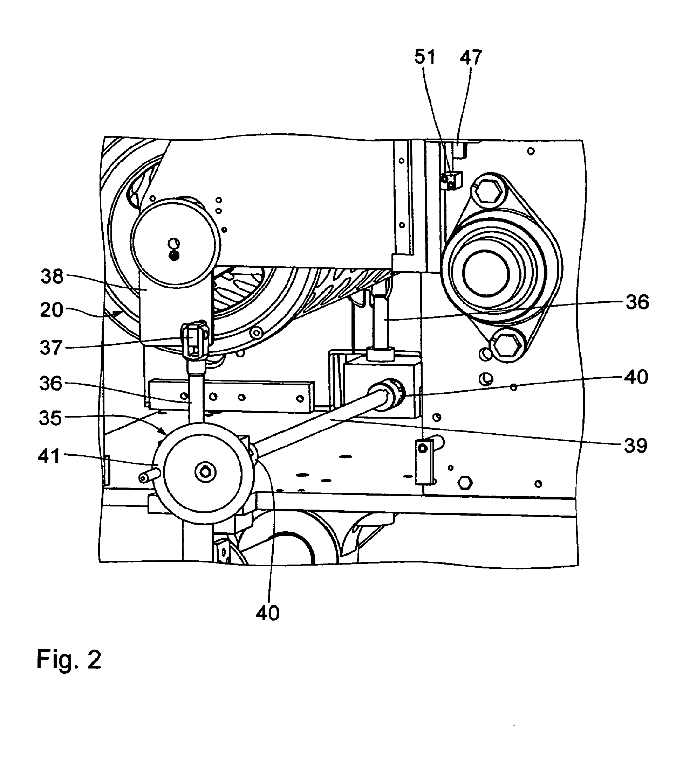

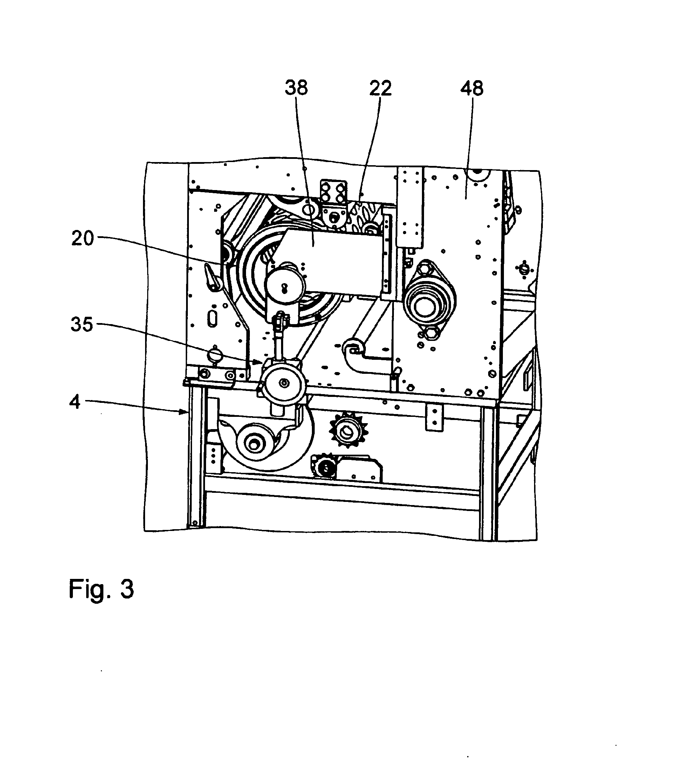

Ein vertikaler Abstand A zwischen der Übergabeeinrichtung 14 und der Wirkkammer 21 kann mit Hilfe einer Hub-Verstelleinrichtung 35 eingestellt werden, die nachfolgend anhand der Fig. 2 bis 6 näher erläutert wird.

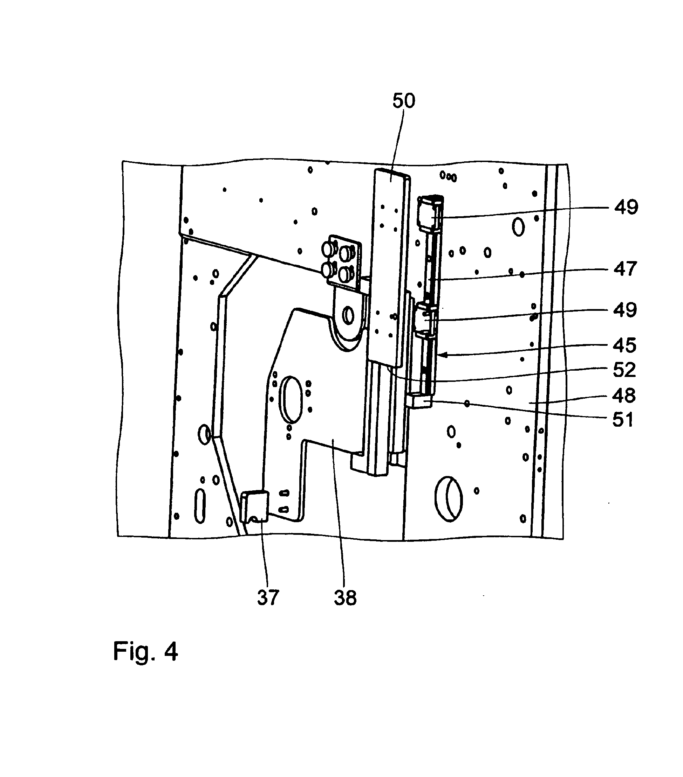

Die Hub-Verstelleinrichtung 35 hat zwei Spindelhubgetriebe 36, die jeweils über ein Hubstück 37 (vgl. auch Fig. 4) und jeweils eine Verbindungsplatte 38 mit einem der Achsstummel der Wirktrommel 20 in Hubverbindung steht. Bei den Spindelhubgetrieben 36 handelt es sich insbesondere um selbsthemmende Spindelhubgetriebe. Die beiden Spindelhubgetriebe 36 stehen über eine Verbindungswelle 39 miteinander in Wirkverbindung. Zwischen den beiden Enden der Verbindungswelle 39 und den beiden Spindelhubgetrieben 36 ist jeweils noch eine Verbindungskupplung 40 zur Kraftübertragung angeordnet. Die Verbindungswelle 39 und damit die Spindelhubgetriebe 36 werden über ein Handrad 41 angetrieben. Bei einer Variante der Teigbearbeitungsanlage 1 kann alternativ oder zusätzlich zum Antrieb über das Handrad 41 auch ein Antriebsmotor 42 zum Antrieb der Verbindungswelle 39 und damit der Hub-Verstelleinrichtung 35 vorgesehen sein, wie dies in der Fig. 6 schematisch angedeutet ist. Bei dieser Variante steht der Antriebsmotor 42 mit der Verbindungswelle 39 in mechanischer Wirkverbindung, wie dies in der Fig. 6 gestrichelt angedeutet ist. Über eine Signalleitung 43 steht der Antriebsmotor 42 mit einer Steuereinrichtung 44 in Signalverbindung, bei der es sich um eine zentrale Steuereinrichtung der Teigbearbeitungsanlage 1 handeln kann. Über eine in der Zeichnung nicht dargestellte Signalverbindung kann die Steuereinrichtung 44 mit mindestens einer weiteren der Antriebskomponenten, beispielsweise mit einem der Antriebsmotoren für die Wirktrommel 20, in Signalverbindung stehen.

Eine Hub-Verstellbewegung, die durch die Hub-Verstelleinrichtung 35 erzeugt werden kann, ist über zwei jeweils den beiden Spindelhubgetrieben 36 zugeordnete Linear-Führungseinrichtungen 45, 46 gegeben. Die Linear-Führungseinrichtungen 45, 46 sind insbesondere als Kugelumlaufführungen ausgeführt. Die eine dieser beiden Linear-Führungseinrichtungen, die Linear-Führungseinrichtung 45, ist in der Fig. 4 in einer Explosionsdarstellung gezeigt, die andere der beiden Linear-Führungseinrichtungen, die Linear-Führungseinrichtung 46, die dem Antriebsmotor 26 benachbart angeordnet ist, ist in der Fig. 5 in einer Explosionsdarstellung gezeigt.

Die Linear-Führungseinrichtung 45 hat eine vertikal verlaufende Führungsstange 46, die über Zylinderschrauben mit einer Tragplatte 48 des Tragrahmens 4 verschraubt ist. Die Führungsstange 47 ist eine Profilstange mit einem Schwalbenschwanz-Führungsprofil. Komplementär zu diesem Querschnitt ist ein Innenquerschnitt zweier Führungsklötze 49 ausgeführt, die auf der Führungsstange 47 mit minimalem Spiel längs der Führungsstange 47 laufen können. Die beiden Führungsklötze 49 sind über jeweils vier Schrauben mit einer Führungsplatte 50 verschraubt, die wiederum starr mit der Verbindungsplatte 38 verbunden ist.

Am unteren Ende der Führungsstange 47 ist ein Anschlagkörper 51 mit der Tragplatte 48 verschraubt, mit dem als Gegenkörper eine untere Stirnwand 52 der Führungsplatte 50 zusammenwirkt. Komponenten der zweiten Linear-Führungseinrichtung 46, die mit denen der ersten, bereits beschriebenen Linear-Führungseinrichtung 45 übereinstimmen, erhalten nachfolgend die gleichen Bezugsziffern und werden nicht nochmals im Einzelnen diskutiert.

Die Linear-Führungseinrichtung 46 weist insgesamt zwei ebenfalls vertikal verlaufende Führungsstangen 47 auf. Die beiden Führungsstangen 47 sind wiederum mit einer Tragplatte 48 des Tragrahmens 4 verschraubt. Jede dieser beiden Führungsstangen 47 hat zwei auf ihr laufende Führungsklötze 49, von denen in der Fig. 5 drei Führungsklötze 49 sichtbar sind. Mit den insgesamt vier Führungsklötzen 49 verschraubt ist eine Führungsplatte 50, die mit dem Antriebsmotor 26 tragend verbunden ist.

Bei einer Höhenverstellung der Wirktrommel 20 zur Veränderung des Abstandes A wird die Bandantriebswalze 29 nicht mitverlagert, sondern behält ihre Relativposition zum Tragrahmen 4 bei. Daher weist die Teigbearbeitungsanlage 1 zum notwendigen Längenausgleich des Wirkbandes 25 bei einer Hubverstellung der Wirktrommel 20 eine Bandlängen-Ausgleichseinrichtung auf. Diese kann durch eine federnde Lagerung 53 der in der Fig. 1 rechts dargestellten Umlenkrolle 28 ausgeführt sein.

Die Teigbearbeitungsanlage 1 funktioniert folgendermaßen: Der Teigbearbeitungsanlage 1 über den Zuführtrichter 3 zu gegebener Teig 2 tritt bei in der Zeichnung nach rechts zurückgezogenem Förderkolben 8 in den Förderraum am Boden des Zuführtrichter 3 ein. Der Förderkolben 8 wird dann, angetrieben über den Kurbeltrieb 9, in Richtung des wie in der Fig. 1 ausgerichteten Drehschiebers 14 geführt. Der im Förderraum befindliche Teig 2 wird hierdurch zwischen dem Boden 11 des Förderkolbens 8 und dem Ausstoßkolben 16 des Drehschiebers 14 komprimiert. Am Ende der Förderbewegung des Förderkolbens 8 in Richtung auf den Drehschieber 14 zu ist letzterer in einer Stellung, in der der Boden 11 der Umfangswand des Drehschiebers 14 relativ nahe benachbart ist. Der komprimierte Teig 2 befindet sich dann im Weitergaberaum zwischen dem Förderkolben 8 und dem Ausstoßkolben 16. Anschließend dreht sich der Drehschieber 14 im Uhrzeigersinn, wobei bei dieser Drehbewegung die Portionierkammer 13 zunächst begrenzt ist zwischen den Wänden der beiden Flügel des Drehschiebers 14, der Ausstoßwand des Ausstoßkolbens 16 sowie der Führungswand 17 des Trägerkörpers 18. Bei einer weiteren Drehung des Drehschiebers 14 erreicht die Portionierkammer 13 eine Position, die in etwa gegenüberliegend einer obersten der Wirkkammern 21 der Wirktrommel 20 liegt. In dieser Übergabeposition der Portionskammer 13 zur Wirkkammer 21 wird die Abwurfwalze 19 aktiv und führt dazu, dass sich der Teigling 12 vom Ausstoßkolben 16 löst und in die zugeordnete Wirkkammer 21 fällt. Die genaue Übergabeposition der Portionierkammer 13 zur zugeordneten Wirkkammer 21 zur zielgenauen Übergabe des Teiglings 12 in vertikaler sowie in der Fig. 1 horizontaler Richtung hängt von verschiedenen Parametern ab. Hierzu gehören die Teigart, die Teigmenge, die Teigdichte sowie die relativen Größen der Portionierkammer 13 zur Wirkkammer 20. Bei einer größeren portionierten Teigmenge des Teiglings 12 kann beispielsweise ein größerer Abstand A zwischen der Portionierkammer 13 und der zugeordneten Wirkkammer 21 eine sichere Übergabe begünstigen. Bestimmte Teigkonsistenzen können zudem einen gewissen horizontalen Versatz der zugeordneten Wirkkammer 21 zur Portionierkammer 13 erfordern, damit eine gesicherte Übergabe des Teiglings 12 erfolgt. Je nach den vorstehend genannten Teigparametern wird daher ein bestimmter Abstand A über die Hub-Verstelleinrichtung 35 eingestellt. Dies kann manuell über das Handrad 41 oder aber, soweit der Antriebsmotor 42 vorliegt, gesteuert über die Steuereinrichtung 44 erfolgen. Zusätzlich kann durch Ansteuerung des Drehantriebs für die Kammertrommel 22 ein gewünschter horizontaler bzw. lateraler Versatz der zugeordneten Wirkkammer 21 zur Portionierkammer 13 eingestellt werden. Die Wirkkammer 21 kann dann nicht, wie dies in der Fig. 1 dargestellt ist, exakt unter dem Drehschieber 14 angeordnet sein, sondern in Drehrichtung 54 oder entgegen dieser Drehrichtung 54 leicht versetzt zu dieser Position. Die jeweils durch Vorversuche ermittelte optimierte Einstellung des Abstandes A sowie des horizontalen Abstandes kann in der Steuereinrichtung 44 in einer Tabelle abgespeichert und abhängig von den Teigparametern automatisch abgerufen werden, so dass die Hub-Verstelleinrichtung 35 und ggf. der Antrieb für die Kammertrommel 22 automatisch zur Vorgabe einer optimalen Übergabeposition der Portionierkammer 13 zur zugeordneten Wirkkammer 21 gewährleistet ist.

Nach sicherer Übergabe des Teiglings 12 in die Wirkkammer 21 dreht sich die Kammertrommel 22 in der Drehrichtung 54, so dass die Wirkkammern 21 nach außen hin über das Wirkband 25 während des Wirkbetriebs der Wirktrommel 20 verschlossen werden. Sodann führt die Wirktrommel 20 eine Relativbewegung der rotierenden Kammertrommel 22 zur inneren Wirkwand 23 einerseits und zum Wirkband 25 andererseits aus, so dass die in den Wirkkammern 21 zwischen der inneren Wirkwand 23 und dem Wirkband 25 befindlichen Teiglinge 12 effektiv gewirkt werden. Die Kammertrommel 22 wird während des Wirkbetriebs schrittweise in der Drehrichtung 54 weitergedreht. Die gewirkten Teiglinge 12 verlassen die Wirktrommel 20 nach dem Wirken über das Abführ-Fördertrum 30 des Wirkbandes 25 und dann über die Teig-Abführeinrichtung 31.

Die Hub-Verstelleinrichtung 35 kann nicht nur zur Herbeiführung einer optimierten Relativposition der Portionierkammer 13 zur zugeordneten Wirkkammer 21, sondern auch aktiv zur Übergabe des Teiglings 12 herangezogen werden. Dies wird nachfolgend anhand der Fig. 7 näher erläutert. Komponenten, die denjenigen entsprechen, die vorstehend unter Bezugnahme auf die Fig. 1 bis 6 bereits diskutiert wurden, tragen die gleichen Bezugsziffern und werden nicht nochmals im Einzelnen erläutert.

Bei der Ausführung nach Fig. 7 leistet die Hub-Verstelleinrichtung 35 einen Hub längs einer Hubrichtung 55 während jeder Übergabe eines Teiglings 12 von der Portionierkammer 13 zur zugeordneten Wirkkammer 21.

Fig. 7 zeigt die Situation, bei der der Ausstoßkolben 16 den Teigling 12 aus dem Drehschieber 14 heraus ausgestoßen hat. Der Teigling 12 haftet dabei noch an der Ausstoßwand 15 des Ausstoßkolbens 16. Durch den Einsatz der Hub-Verstelleinrichtung 35 ist der Abstand A zwischen dem Drehschieber 14 und der Wirktrommel 20 derart reduziert, dass in dieser Ausstoß-Position der Teigling 12 in die zugeordnete Wirkkammer 21 hineinragt. Zur Übergabe des Teiglings 12 in die Wirkkammer 21 kann nun der Drehantrieb der Kammertrommel 22 in der Drehrichtung 54 (oder in Gegenrichtung) betätigt werden, so dass der dann mit dem Teigling 12 in Kontakt kommende Wirkzellen-Begrenzungssteg 24 den Teigling 12 von der Ausstoßwand 15 ablöst, wobei der dann vom Ausstoßkolben 16 abgelöste Teigling 12 in die zugeordnete Wirkkammer 21 sicher fällt.

Durch eine synchronisierte Relativbewegung der Wirktrommel 20 zu den Bewegungen des Drehschiebers 14 und des Ausstoßkolbens 16 kann auf diese Weise ein gesteuertes Übernehmen des Teiglings 12 von der Portionierkammer 13 in die Wirkkammer 21 erfolgen. Zum Erreichen dieser synchronisierten Relativbewegung kann die Hub-Verstelleinrichtung 35 insbesondere synchronisiert mit dem Bewegungsablauf des Förderkolbens 8 und des Drehschiebers 14 intermittierend betätigt werden.

Bei einer nicht dargestellten Ausführung der Teigbearbeitungsanlage 1 weisen die Linear-Führungseinrichtungen 45, 46 zusätzlich eine Verriegelungseinrichtung zur Verriegelung der jeweiligen Hubposition der Wirktrommel 20 auf. Durch die Verriegelungseinrichtung kann ein negativer Einfluss von Vibrationen der Wirktrommel 20 auf die Linear-Führungseinrichtungen 45, 46 verhindert sein.

Alternativ oder zusätzlich zu einer vertikalen Hubverstellung der Wirktrommel 20 ist auch eine entsprechende vertikale Hubverstellung des Drehschiebers 14 möglich. Hierzu kann der Drehschieber 14 eine ggf. motorisch angetriebene Hub-Verstelleinrichtung entsprechend der Hub-Verstelleinrichtung 35 aufweisen, die vorstehend im Zusammenhang mit der Wirktrommel 20 erläutert wurde.

## Patentansprüche

1. Teigbearbeitungsanlage (1)
- mit einem Tragrahmen (4),
- mit einer Teig-Zuführeinrichtung (3, 8),
- mit einer Teig-Portioniervorrichtung (14, 16),
- mit einer Teig-Wirkvorrichtung (20),
- mit einer Teig-Übergabeeinrichtung, die während Übergabezeiträumen mindestens eine Teigportion (12) von mindestens einer Portionierkammer (13) der Teig-Portioniervorrichtung (14, 16) an mindestens eine Wirkkammer (21) der Teig-Wirkvorrichtung (20) übergibt, wobei
die Teig-Übergabeeinrichtung derart ausgeführt ist, dass in einer Übergabeposition der Portionierkammer (13) sich die Teigportion (12) von einem Ausstoßkolben (16) löst und in die zugeordnete Wirkkammer (21) fällt,
**dadurch gekennzeichnet, dass** eine Verstelleinrichtung (35) vorgesehen ist zur Vorgabe eines vertikalen Abstandes (A) zwischen der Übergabeeinrichtung (14, 16) und der Wirkkammer (21).

2. Teigbearbeitungsanlage nach Anspruch 1, **dadurch gekennzeichnet, dass** die Verstelleinrichtung (35) so ausgeführt ist, dass auch eine Vorgabe eines horizontalen Abstandes zwischen der Übergabeeinrichtung (14, 16) und der Wirkkammer (21) gegeben ist.

3. Teigbearbeitungsanlage nach Anspruch 1 oder 2, **dadurch gekennzeichnet, dass** die Verstelleinrichtung (35) einen Verlagerungsantrieb (41; 42) zur Verlagerung der Teig-Wirkvorrichtung (20) mit vertikaler Richtungskomponente aufweist.

4. Teigbearbeitungsanlage nach einem der Ansprüche 1 bis 3, **dadurch gekennzeichnet, dass** die Verstelleinrichtung (35) einen Verlagerungsantrieb zur Verlagerung der Teig-Portioniervorrichtung (14, 16) mit vertikaler Richtungskomponente aufweist.

5. Teigbearbeitungsanlage nach einem der Ansprüche 4 oder 5, **dadurch gekennzeichnet, dass** die Verstelleinrichtung (35) mit einem Antriebmotor (42) verbunden ist, der mit einer Steuereinrichtung (44) in Signalverbindung steht.

6. Teigbearbeitungsanlage nach Anspruch 5, **dadurch gekennzeichnet, dass** die Steuereinrichtung (44) mit einer Antriebskomponente (26) eines Antriebs der Teig-Wirkvorrichtung (20) in Signalverbindung steht.

7. Teigbearbeitungsanlage nach einem der Ansprüche 3 bis 6, **dadurch gekennzeichnet, dass** der Verlagerungsantrieb mindestens ein Spindelhubgetriebe (36) aufweist.

8. Teigbearbeitungsanlage nach einem der Ansprüche 1 bis 7, **dadurch gekennzeichnet, dass** die Verstelleinrichtung (35) eine Führungseinrichtung (45, 46) zur Führung einer Verlagerungsbewegung der Teig-Wirkvorrichtung (20) und/oder der Teig-Portioniervorrichtung (14, 16) gegenüber dem Tragrahmen (4) aufweist.

9. Teigbearbeitungsanlage nach einem der Ansprüche 1 bis 8, **dadurch gekennzeichnet, dass** die Teig-Wirkvorrichtung (20) als Wirktrommel ausgebildet ist.

10. Teigbearbeitungsanlage nach Anspruch 9, **dadurch gekennzeichnet, dass** die Führungseinrichtung (45, 46) beiderseits an Achsstummeln der Wirktrommel (20) angeordnet ist, wobei insbesondere jeder, jeweils einem Achsstummel zugeordneten Teil-Führungseinrichtung (45, 46) eines der Spindelhubgetriebe (36) zugeordnet ist.

11. Teigbearbeitungsanlage nach Anspruch 10, **dadurch gekennzeichnet, dass** die Führungseinrichtung zwei Linear-Führungen (45, 46) aufweist, die den beiden Achsstummeln der Wirktrommel (20) zugeordnet sind, wobei die Linear-Führungen (45, 46) insbesondere als Kugelumlaufführungen ausgebildet sind.

12. Teigbearbeitungsanlage nach einem der Ansprüche 1 bis 11, **dadurch gekennzeichnet, dass** die Verstelleinrichtung (35) so ausgeführt ist, dass bei einer Verlagerung der Teig-Wirkvorrichtung (20) und/oder der Teig-Portioniervorrichtung (14, 16) zumindest eine Antriebskomponente der verlagerten Komponente (20; 14, 16) ortsfest bleibt.

13. Teigbearbeitungsanlage nach Anspruch 12, **dadurch gekennzeichnet, dass** eine Antriebskomponente (29) für die Teig-Wirkvorrichtung (20) als Bandantrieb mit einer Bandlängen-Ausgleichseinrichtung (53) ausgebildet ist.

## Claims

1. Dough processing machine (1) comprising
- a support frame (4);
- a dough feed device (3, 8);
- a dough portioning device (14, 16);
- a dough kneading device (20);
- a dough transfer device which transfers at least one dough portion (12) from at least one portioning chamber (13) of the dough portioning device (14, 16) to at least one kneading chamber (21) of the dough kneading device (20) during transfer time periods, wherein the dough transfer device is designed such that in a transfer position of the portioning chamber (13), the dough portion (12) detaches from a discharge piston (16) and falls into the associated kneading chamber (21),
**characterized in that** an adjustment device (35) is provided for defining a vertical distance (A) between the transfer device (14, 16) and the kneading chamber (21).

2. Dough processing machine according to claim 1, **characterized in that** the adjustment device (35) is designed in such a way as to allow a horizontal distance to be additionally defined between the transfer device (14, 16) and the kneading chamber (21).

3. Dough processing machine according to claim 1 or 2, **characterized in that** the adjustment device (35) comprises a displacement drive (41; 42) for displacement of the dough kneading device (20) with a vertical directional component.

4. Dough processing machine according to one of claims 1 to 3, **characterized in that** the adjustment device (35) comprises a displacement drive for displacement of the dough portioning device (14, 16) with a vertical directional component.

5. Dough processing machine according to one of claims 4 or 5, **characterized in that** the adjustment device (35) is connected to a drive motor (42) which is in a signal connection with a control unit (44).

6. Dough processing machine according to claim 5, **characterized in that** the control unit (44) is in a signal connection with a drive component (26) of a drive of the dough kneading device (20).

7. Dough processing machine according to one of claims 3 to 6, **characterized in that** the displacement drive comprises at least one spindle-type lifting gear (36).

8. Dough processing machine according to one of claims 1 to 7, **characterized in that** the adjustment device (35) comprises a guide means (45, 46) for guiding a displacement movement of the dough kneading device (20) and/or the dough portioning device (14, 16) relative to the support frame (4).

9. Dough processing machine according to one of claims 1 to 8, **characterized in that** the dough kneading device (20) is a kneading drum.

10. Dough processing machine according to claim 9, **characterized in that** the guide means (45, 46) is on both sides mounted on stub axles of the kneading drum (20), wherein one of the spindly-type lifting gears (36) is in particular assigned to each partial guide means (45, 46) which is in each case assigned to one stub axle.

11. Dough processing machine according to claim 10, **characterized in that** the guide means comprises two linear guides (45, 46) which are assigned to the two stub axles of the kneading drum (20), wherein the linear guides (45, 46) are in particular designed as recirculating ball bearing guides.

12. Dough processing machine according to one of claims 1 to 11, **characterized in that** the adjustment device (35) is designed such that when the dough kneading device (20) and/or the dough portioning device (14, 16) are displaced, at least a drive component of the displaced component (20; 14, 16) remains in place.

13. Dough processing machine according to claim 12, **characterized in that** a drive component (29) for the dough kneading device (20) is a belt drive with a belt-length compensation device (53).

## Revendications

1. Installation de traitement de pâte (1)
- comprenant un cadre support (4),
- comprenant un système d'amenée de la pâte (3, 8),
- comprenant un dispositif de fractionnement de la pâte (14, 16),
- comprenant un dispositif de fermentation de la pâte (20),
- comprenant un système de transfert de la pâte qui, à des intervalles de temps de transfert, transporte au moins une portion de pâte (12) d'au moins une chambre de fractionnement (13) du dispositif de fractionnement de la pâte (14, 16) vers au moins une chambre de fermentation (21) du dispositif de fermentation de la pâte (20),
le système de transfert de la pâte étant conçu de telle manière que, dans une position de transfert de la chambre de fractionnement (13), la portion de pâte (12) se détache d'un piston de sortie (16) et tombe dans la chambre de fermentation (21) correspondante
**caractérisée en ce**
**qu'**un système de réglage (35) est prévu pour le préréglage d'un espace vertical (A) entre le système de transfert (14, 16) et la chambre de fermentation (21).

2. Installation de traitement de pâte selon la revendication 1 **caractérisée en ce que** le système de réglage (35) est conçu de telle manière qu'un préréglage d'un espace horizontal entre le système de transfert (14, 16) et la chambre de fermentation (21) est également donné.

3. Installation de traitement de pâte selon les revendications 1 ou 2 **caractérisée en ce que** le système de réglage (35) présente un entraînement de déplacement (41 ; 42) pour la migration du dispositif de fermentation de la pâte (20) avec une composante de direction verticale.

4. Installation de traitement de pâte selon l'une des revendications de 1 à 3 **caractérisée en ce que** le système de réglage (35) présente un entraînement de déplacement pour la migration du dispositif de fractionnement de la pâte (14, 16) avec une composante de direction verticale.

5. Installation de traitement de pâte selon l'une des revendications 4 ou 5 **caractérisée en ce que** le système de réglage (35) est relié à un moteur d'entrainement (42) qui est en relation par des signaux avec un système de commande (44).

6. Installation de traitement de pâte selon la revendication 5 **caractérisée en ce que** le système de commande (44) est en liaison par des signaux avec une composante d'entraînement (26) d'un entraînement du dispositif de fermentation de la pâte (26).

7. Installation de traitement de pâte selon l'une des revendications de 3 à 6 **caractérisée en ce que** l'entraînement de déplacement présente au moins un vérin à vis (36).

8. Installation de traitement de pâte selon l'une des revendications de 1 à 7 **caractérisée en ce que** le système de réglage (35) présente un système de guidage (45, 46) pour la conduite d'un mouvement de déplacement du dispositif de fermentation de la pâte (20), et/ou du dispositif de fractionnement de la pâte (14, 16), par rapport au cadre support (4).

9. Installation de traitement de pâte selon l'une des revendications de 1 à 8 **caractérisée en ce que** le dispositif de fermentation de la pâte (20) est conçu sous la forme d'un tambour de fermentation.

10. Installation de traitement de pâte selon la revendication 9 **caractérisée en ce que** le système de guidage (45, 46) est disposé des deux côtés du tambour de fermentation (20) sur des moignons d'axes, où, en particulier, chaque partie de système de guidage (45, 46) correspondant à un moignon d'axe respectif concorde avec l'un des vérins à vis (36).

11. Installation de traitement de pâte selon la revendication 10 **caractérisée en ce que** le système de guidage présente deux guides linéaires (45, 46), qui sont disposés sur les deux moignons d'axe du tambour de fermentation (20), les guides linéaires (45, 46) étant, en particulier, conçus sous la forme de patins à billes.

12. Installation de traitement de pâte selon l'une des revendications de 1 à 11 **caractérisée en ce que** le système de réglage (35) est conçu de telle manière que, pour un déplacement du dispositif de fermentation de la pâte (20), et/ou du dispositif de fractionnement de la pâte (14, 16), au moins une composante d'entraînement parmi les composantes déplacées (20 ; 14, 16) reste en place.

13. Installation de traitement de pâte selon la revendication 12 **caractérisée en ce qu'**une composante d'entraînement (29) est conçue sous la forme d'un entraînement à bande comprenant un système d'équilibrage des longueurs des bandes (53) pour le dispositif de fermentation de la pâte (20).
